# EUROPÄISCHE PATENTSCHRIFT

(11) **EP 1 092 906 B1**
(45) Veröffentlichungstag und Bekanntmachung des Hinweises auf die Patenterteilung: **17.08.2005**
(21) Anmeldenummer: 00115878.1
(22) Anmeldetag: 25.07.2000
(51) Int. Cl.: F16L 25/00, F16L 17/025

(54) **Dichtungsring für ein mit äusseren Wellen versehenes Kunststoffrohr**
Sealing ring for an externally corrugated plastic pipe
Bague d'étanchéité pour un tuyau en plastique annelé extérieurement

(30) Priorität: 15.10.1999 DE 19949867
(43) Veröffentlichungstag der Anmeldung: 18.04.2001
(73) Patentinhaber: M.O.L. GUMMIVERARBEITUNG GMBH & Co. KG, D-49377 Vechta (DE)
(72) Erfinder: Lamping, Alwin, 49393 Lohne (DE)
(74) Vertreter: Meyer, Ludgerus A., Dipl.-Ing.

(56) Entgegenhaltungen:
- US-A- 4 304 415
- US-A- 4 438 935
- US-A- 4 702 502
- US-A- 5 024 454
- US-A- 5 687 976

## Beschreibung

Die Erfindung betrifft einen Dichtungsring für ein mit äußeren Wellen versehenes Kunststoffrohr nach dem Oberbegriff des Anspruchs 1. Ein solcher Dichtungring ist z.B. aus der Patentschrift US 5 687 976 bekannt.

Die Verbindung zweier Kunststoffrohre, beispielsweise Kanalisationsrohre, erfolgt in der Regel dadurch, daß in das mit einer Sicke versehene Muffenende eine Dichtung eingesetzt wird, und das zweite Rohr mit seinem Spitzende in die Muffe eingeschoben wird. Zur Verbindung zweier Spitzenden ist es auch bekannt, eine Hülse zu verwenden, in die die Spitzenden beidseitig eingesteckt werden. Dabei weist die Hülse zwei Sicken mit Dichtungen auf.

Bei doppelwandigen Kunststoffrohren mit äußeren Wellen (sogenannte Wellrohre) ist heute praktisch nur noch eine Verbindung über das Einschieben von muffenlosen Rohrabschnitten in Hülsen gebräuchlich. Die bei glattwandigen Kunststoffrohren verwendeten Sicken in den Hülsen sind hierbei nicht verwendbar, da auf diese Weise keine Abdichtung möglich ist. Stattdessen werden Dichtringe verwendet, die in einem Wellental des in die Hülse einzusteckenden Wellrohres aufgenommen sind und die Abdichtung zur Hülse herstellen.

Bekannte Dichtungen für diesen Zweck sind pilzförmig ausgebildet und werden beim Einschieben eines Wellrohres in eine Hülse im Wellental des Wellrohres komprimiert. Das Einstecken eines Wellrohres in die Hülse muß daher mit relativ hohem Kraftaufwand erfolgen, um eine ausreichende Kompression und Abdichtung herzustellen.

Der Erfindung liegt die Aufgabe zugrunde, einen verbesserten Dichtungsring für ein mit äußeren Wellen versehenes Kunststoffrohr anzugeben, welcher bei verbesserter Dichtungsgüte ein leichtes Einschieben des Wellrohres in die Hülse gestattet.

Diese Aufgabe wird durch die im Anspruch 1 angegebene Erfindung gelöst. Vorteilhafte Weiterbildungen der Erfindung sind in Unteransprüchen angegeben.

Der erfindungsgemäße Dichtungsring ist als Lippendichtung symmetrisch aufgebaut, so daß er in beiden Richtungen verwendet werden kann. Er weist eine scheibenringförmige Hauptdichtung zur Abdichtung gegen ein zweites Rohr bzw. eine Hülse auf sowie zwei seitliche Stützkörper zur Anlage an die Wellen des Wellrohres. Die Abdichtung gegenüber dem äußeren Rohr erfolgt also im wesentlichen über eine scheibenringförmige Hauptdichtung, die als Lippendichtung ausgebildet ist. Gegenüber dem Wellrohr wird die Dichtung durch an zwei seitlichen Stützkörper gebildet, welche auf den an das Wellental, das die Dichtung aufnimmt, angrenzenden Wellenbergen zur Anlage kommt.

Ferner enthält der erfindungsgemäße Dichtungsring einen Grundkörper, der im unbelasteten Zustand des Dichtungsrings im wesentlichen spannungsfrei in einem Wellental des Wellrohres aufgenommen ist. An der äußeren Seite geht der Grundkörper über in die zwei Stützkörper und die Hauptdichtung. Die Höhe des Grundkörpers beträgt etwa die Hälfte der Gesamthöhe der Dichtung im unbelasteten Zustand.

Ferner weisen die Stützkörper ausgeprägte Dichtlippen auf, durch die die Stützkörper dichtend an die Flanken der Wellenberge anlegbar sind. Auf der der Hauptdichtung angrenzenden Seite der Stützkörper sind Abstreiflippen vorgesehen, die eine zusätzliche Abdichtung gegenüber dem äußeren Rohr oder die Hülse bilden. Weiterhin ist vorgesehen, daß die Stützkörper einen außenseitigen V-förmigen Einschnitt zur Ausbildung einer zusätzlichen Stützlippe aufweisen.

Beim Einschieben eines mit dem erfindungsgemäßen Dichtring versehenen Wellrohres in eine Hülse wird die Dichtung, die im unbelasteten Zustand spannungsfrei frei im Wellental aufgenommen ist, in das Wellental hineingedrückt, so daß die seitlichen Stützkörper der Dichtung so umgelenkt werden, daß die Stützlippen sich an die Hauptdichtung anlegen. Die Hauptdichtung selbst wird in ihrem äußeren Bereich um etwa 90° abgelenkt, so daß die abgelenkte innere Seite der Hauptdichtung auf der angrenzenden Stützlippe zur Auflage kommt, während die gegenüberliegende Seite der Hauptdichtung die Dichtung gegenüber dem äußeren Rohr bewirkt.

Durch die symmetrische Ausbildung des Dichtrings kann dieser in beiden Richtungen verwendet werden, so daß auf die Einbaurichtung nicht zu achten ist. Seine lippenartige Ausbildung vermeidet die Notwendigkeit des Aufbringens hoher Druckkräfte beim Einschieben eines Wellrohres in eine Hülse. Durch die Ausbildung mehrerer Dichtungsbereiche gegenüber dem äußeren Rohr als auch mehrerer Dichtungsbereiche am Wellrohr ergibt sich eine qualitativ besonders hochwertige Dichtung.

Die Erfndung wird nachstehend anhand eines Ausführungsbeispiels näher erläutert. Es zeigen:
- Fig. 1: einen Dichtungsring im nicht eingebauten Zustand,
- Fig. 2: einen Dichtungsring, der in einem Wellental eines Wellrohres aufgenommen ist, und
- Fig. 3: einen Dichtungsring im Funktionszustand in einem Wellental eines Wellrohres, das in einem äußeren Glattrohr, beispielsweise einer Hülse, aufgenommen ist.

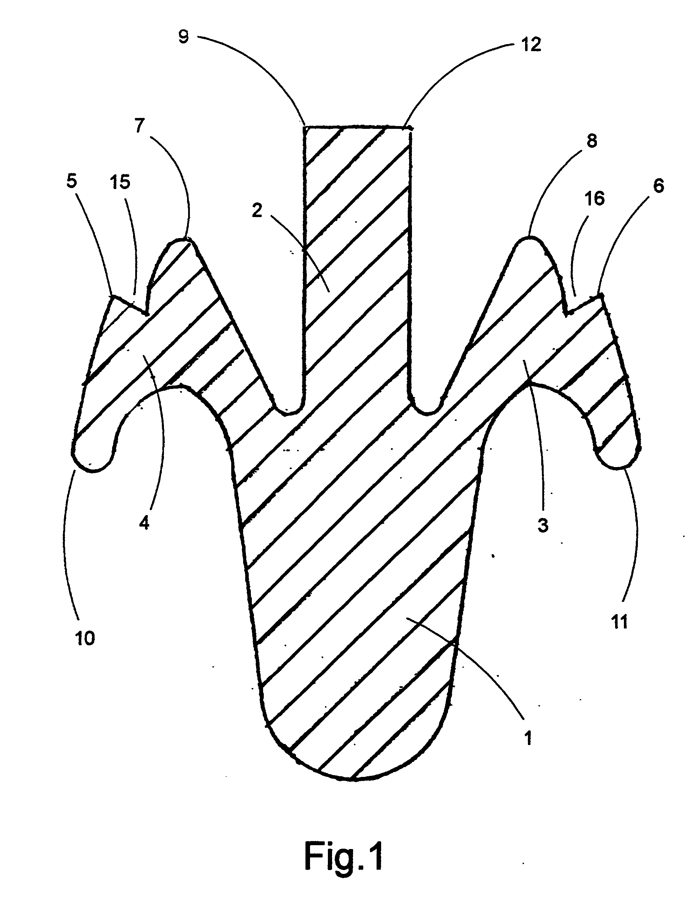

Der in Fig. 1 dargestellte Dichtring enthält einen im Querschnitt etwa umgekehrt glockenförmigen Grundkörper 1 aus einem Vollprofil, dessen äußere Kontur etwa der Kontur eines Wellentales eines Wellrohres entspricht. An der breiteren Seite des Grundkörpers geht dieser in zwei seitliche Stützkörper 3, 4 sowie eine Hauptdichtung 2, die scheibenringförmig in der Symmetrieebene des Dichtrings ausgebildet ist, über. Die achsiale Außenfläche der Hauptdichtung ist flach ausgeführt und bildet damit zwei seitliche Kanten 9, 12.

Die seitlichen Stützkörper, die etwa flügelförmig ausgebildet sind, enthalten Dichtlippen 10, 11, deren Innenseite bogenförmig in den Grundkörper übergeht. Die Außenseite der Stützkörper 3 ist schräg nach innen zur Symmetriebene hin gerichtet und enthält V-förmige Einschnitte 15, 16 an deren zu den Dichtlippen hin gerichteten Kanten Abstreiflippen 5, 6 ausgebildet sind, während die zur Hauptdichtung gerichteten Kanten Stützlippen 7, 8 bilden. Im Ruhezustand der Dichtung befinden sich zwischen der Hauptdichtung 2 und den Stützkörpern 3, 4 ebenfalls V-förmige Einschnitte.

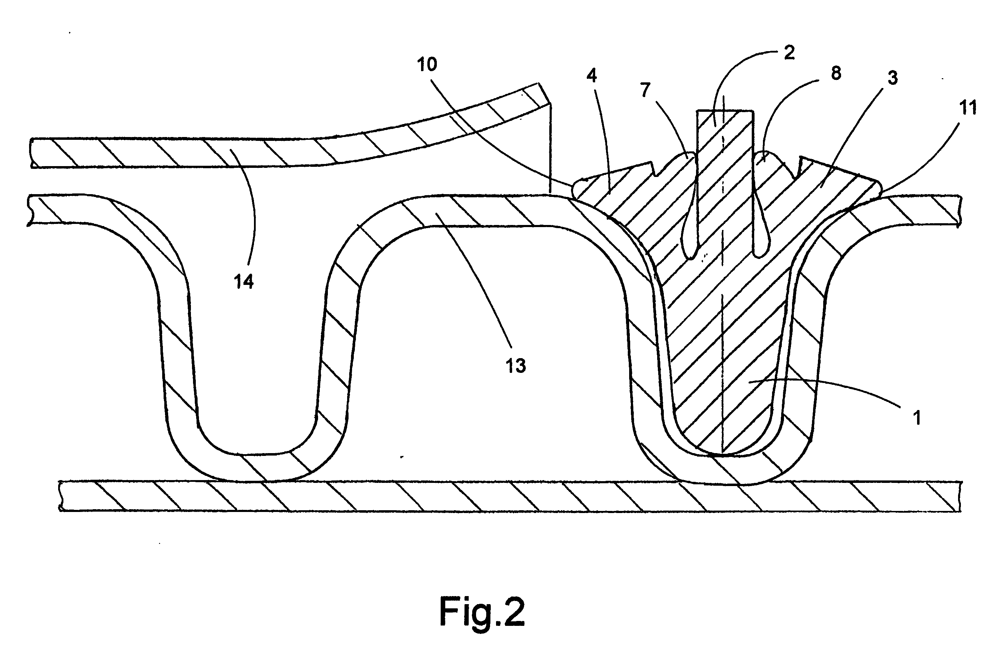

Fig. 2 zeigt den erfindungsgemäßen Dichtring in einem Zustand, in dem er in einem Wellental eines Wellrohres aufgenommen ist. Der Durchmesser der Dichtung ist so bemessen, daß seine Spannung ihn soweit in das Wellental hineinzieht, daß der Grundkörper noch im wesentlichen spannungsfrei im Wellental aufgenommen ist. Durch die Anlage der Dichtlippen 10, 11 an den Flanken des Wellentals sind die Stützkörper 3, 4 in Richtung auf die Hauptdichtung abgelenkt, so daß die Stützlippen 7, 8 im wesentlichen an der Hauptdichtung 2 anliegen. Es ist zu erkennen, daß die Hauptdichtung die seitlichen Stützkörper um ein gewisses Maß überragt.

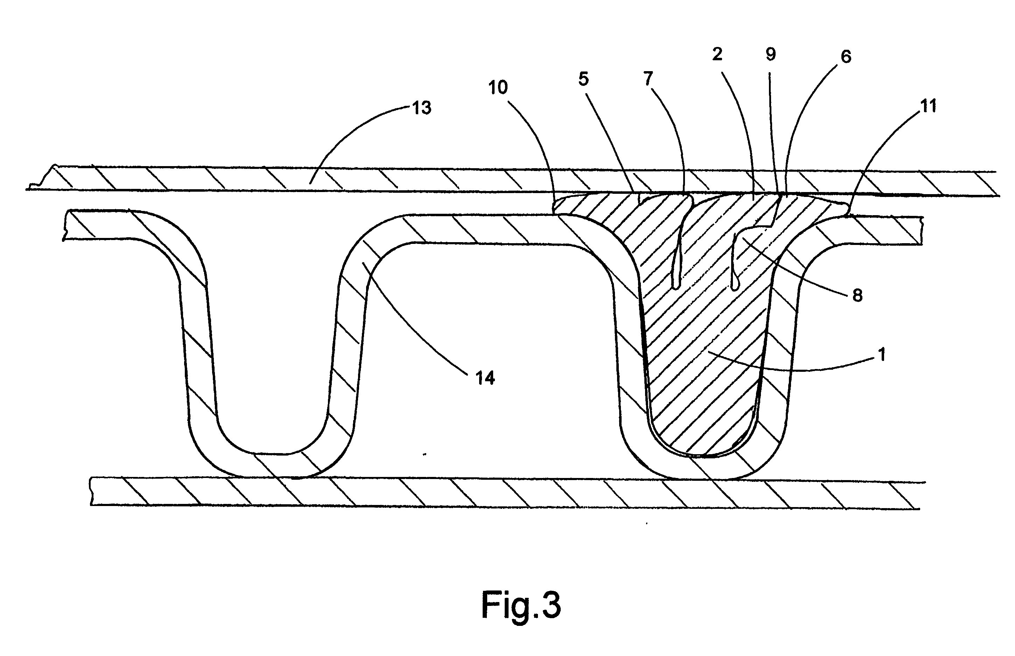

Beim Einschieben des mit der Dichtung versehenen Wellrohres 13 in eine Einschubhülse kommt die Hauptdichtung 2 in Kontakt mit der Innenoberfläche der glatten Einschubhülse, so daß sich ein Zustand der Dichtung einstellt, wie er in Fig. 3 dargestellt ist. Der äußere Bereich der Hauptdichtung 2 hat sich dabei um etwa 90° umgelenkt und ruht nun auf der Stützlippe 8. Dabei wird der Stützkörper 3 weiter zusammengedrückt, so daß auch der Grundkörper so weit niedergedrückt wird, daß sein Volumen den gesamten Innenraum des Wellentals ausfüllt. An der Seite der Dichtung, an der die Hauptdichtung 2 auf der Stützlippe 8 ruht, ergibt sich eine Dichtungswirkung zwischen der Kante 9 der Hauptdichtung 2 und dem äußeren Rohr 14 sowie der Abstreiflippe 6 des Stützkörpers. An der gegenüberliegenden Seite der Hauptdichtung ergeben sich Abdichtungen an der Abstreiflippe 5 sowie der Stützlippe 7. Insgesamt ergeben sich damit vier Dichtungslinien gegenüber dem äußeren Rohr. Das Wellrohr 13 ist gegenüber dem Dichtungsring an den Dichtlippen 10, 11 sowie durch Kontakt des Grundkörpers mit dem Wellental abgedichtet. Die hohe Zahl der Dichtbereiche ergibt eine hohe Dichtwirkung, welche mit Verpreßdichtungen des Standes der Technik nicht zu erreichen sind.

### Bezugszeichenliste

- 1: Grundkörper
- 2: Hauptdichtung
- 3: Stützkörper
- 4: Stützkörper
- 5: Abstreiflippe
- 6: Abstreiflippe
- 7: Stützlippe
- 8: Stützlippe
- 9: Kante
- 10: Dichtlippe
- 11: Dichtlippe
- 12: Kante
- 13: Wellrohr
- 14: Hülse
- 15: Einschnitt
- 16: Einschnitt

## Patentansprüche

1. Dichtungsring für ein mit äußeren Wellen versehenes Kunststoff-Wellrohr, bei dem der symmetrisch ausgebildete Dichtungsring zur Abdichtung gegen ein das Kunststoff-Wellrohr aufnehmendes zweites Rohr (14) mit zwei seitlichen von einem Grundkörper (1) ausgehenden Stützkörpern (3, 4) zur Anlage an die Wellenflanken des Kunststoff-Wellrohres (13) ausgebildet ist, der Grundkörper (1) im unbelasteten Zustand des Dichtungsrings im wesentlichen spannnungsfrei in einem Wellental des Kunststoff-Wellrohres (13) aufnehmbar ist, und die seitlichen Stützkörper (3, 4) vom Grundkörper (1) ausgehend außenseitige Dichtlippen (10, 11) enthalten, die an den angrenzenden Wellenbergen des Kunststoff-Wellrohres (13) anlegbar sind, wobei eine Hauptdichtung (2) bei Einschieben des Kunststoff-Wellrohrs (13) in ein zweites Rohr (14) seitlich abgelenkt wird und den gegen die Schubrichtung angrenzenden Stützkörper (3) zusammendrückt, **dadurch gekennzeichnet, dass** die seitlichen Stützkörper zur Symmetrieebene des Dichtungsrings gerichtete Abstreiflippen (5, 6) aufweisen, dass die vom Grundkörper (1) ausgehende im wesentlichen scheibenringförmig ausgebildete Hauptdichtung (2) die Abstreiflippen (5, 6) in Radialrichtung nach außen überragt und dass die Stützkörper (3, 4) außenseitige V-förmige Einschnitte zur Ausbildung je einer Stützlippe (7, 8) aufweisen.

2. Dichtungsring nach Anspruch 1, **dadurch gekennzeichnet, dass** die außenseitige Kontur des Dichtungsrings von den Dichtlippen (10, 11) ausgehend so ausgebildet ist, dass sie im wesentlichen der Kontur der Wellen des den Dichtring aufnehmenden Kunststoff-Wellrohres folgt.

3. Dichtungsring nach Anspruch 1, **dadurch gekennzeichnet, dass** der Grundkörper (1) im Querschnitt eine Höhe aufweist, welche etwa der Hälfte der Gesamthöhe des Dichtungsrings entspricht.

## Claims

1. Sealing ring for a corrugated plastic tube which is provided with external corrugations and in which the symmetrically constructed sealing ring is constructed for the purpose of effecting sealing against a second tube (14) which receives said corrugated plastic tube and has two supporting members (3, 4), which emanate laterally from a base member (1), for resting against the flanks of the corrugations in the corrugated plastic tube (13); the base member (1) can be received, when the sealing ring is in the non-loaded condition, in an essentially tension-free manner in a trough of a corrugation in the corrugated plastic tube (13); and the lateral supporting members (3, 4) contain, in a manner emanating from the base member (1), external sealing lips (10, 11) which can be applied against the adjoining peaks of corrugations in the corrugated plastic tube (13); wherein a main seal (2) is deflected laterally when the corrugated plastic tube (13) is inserted in a second tube (14), and said main seal compresses the supporting member (3) which is adjacent, counter to the direction of pushing, **characterised in that** the lateral supporting members have stripping lips (5, 6) which are directed towards the plane of symmetry of the sealing ring; that the main seal (2), which emanates from the base member (1) and is constructed essentially in the shape of an annular disc, projects outwards above the stripping lips (5, 6) in the radial direction; and that the supporting members (3, 4) have external V-shaped notches for the purpose of each constructing a supporting lip (7, 8).

2. Sealing ring according to claim 1, **characterised in that** the external contour of the sealing ring is constructed, in a manner emanating from the sealing lips (10, 11), in such a way that it essentially follows the contour of the corrugations of the corrugated plastic tube which receives the sealing ring.

3. Sealing ring according to claim 1, **characterised in that** the base member (1) has, in cross-section, a height which approximately corresponds to half the overall height of the sealing ring.

## Revendications

1. Bague d'étanchéité pour un tuyau en matière plastique pourvu de cannelures extérieures, la bague d'étanchéité de forme symétrique étant pourvue, pour l'étanchéité par rapport à un second tuyau (14) recevant le tuyau ondulé en matière plastique, de deux corps d'appui latéraux (3, 4) qui partent d'un corps de base (1) et qui sont destinés à s'appliquer contre les flancs des cannelures du tuyau ondulé en matière plastique (13), le corps de base (1) étant apte à être reçu globalement sans tension, quand la bague d'étanchéité est non contrainte, dans un creux de cannelure du tuyau ondulé en matière plastique (13) et les corps d'appui latéraux (3, 4) contenant à partir du corps de base (1) des lèvres d'étanchéité extérieures (10, 11) qui sont aptes à être appliquées contre les crêtes de cannelures voisines prévues sur le tuyau ondulé en matière plastique (13), étant précisé qu'un joint d'étanchéité principal (2) est dévié latéralement quand on introduit le tuyau ondulé en matière plastique (13) dans un second tuyau (14), et comprime le corps d'appui (3) voisin dans le sens d'introduction, **caractérisée en ce que** les corps d'appui latéraux présentent des lèvres de raclage (5, 6) dirigées vers le plan de symétrie de la bague d'étanchéité, **en ce que** le joint d'étanchéité principal (2) sensiblement en forme de rondelle qui part du corps de base (1) dépasse des lèvres de raclage (5, 6) radialement vers l'extérieur et **en ce que** les corps d'appui (3, 4) présentent des encoches extérieures en V pour former des lèvres d'appui respectives (7, 8).

2. Bague d'étanchéité selon la revendication 1, **caractérisée en ce que** le contour extérieur de la bague d'étanchéité est formé à partir des lèvres d'étanchéité (10, 11) de manière à suivre sensiblement le contour des cannelures du tuyau ondulé en matière plastique qui reçoit ladite bague d'étanchéité.

3. Bague d'étanchéité selon la revendication 1, **caractérisée en ce que** le corps de base (1) présente en coupe transversale une hauteur qui correspond à peu près à la moitié de la hauteur totale de la bague d'étanchéité.
